Europäisches Patentamt

European Patent Office

Office européen des brevets

(11) Numéro de publication: **0 251 876 B1**

## FASCICULE DE BREVET EUROPEEN

(45) Date de publication de fascicule du brevet:
27.03.91

(51) Int. Cl.5: **E02F 5/10, E02F 5/12, E02F 5/14, F16L 1/028**

(21) Numéro de dépôt: 87401413.7

(22) Date de dépôt: 22.06.87

(54) Ensemble mécanisé pour le creusage d'une tranchée et la pose d'objets allongés.

(30) Priorité: 26.06.86 FR 8609277

(43) Date de publication de la demande:
07.01.88 Bulletin 88/01

(45) Mention de la délivrance du brevet:
27.03.91 Bulletin 91/13

(84) Etats contractants désignés:
AT BE CH DE ES GB GR IT LI LU NL SE

(56) Documents cités:
EP-A- 0 162 623
FR-A- 2 563 550
US-A- 3 300 989
US-A- 3 348 383
US-A- 4 114 391
FR-A- 2 131 779
US-A- 3 203 188
US-A- 3 332 249
US-A- 3 874 182
US-A- 4 332 511

(73) Titulaire: **ETS. RIVARD S.A. Société dite:**
**Rue de la Fraternité**
**F-49920 Daumeray(FR)**

(72) Inventeur: **Rivard,Daniel**
**Rue Rouget Le Braconnier**
**F-49920 Daumeray(FR)**

(74) Mandataire: **Bonnetat, Christian et al**
**CABINET BONNETAT 23, Rue de Léningrad**
**F-75008 Paris(FR)**

Rank Xerox (UK) Business Services

## Description

La présente invention concerne un ensemble mécanisé pour le creusage d'une tranchée dans le sol et la pose d'objets allongés ou analogues dans ladite tranchée.

Quoique non exclusivement, l'ensemble mécanisé de l'invention est plus particulièrement destiné à la pose dans le sol de câbles électriques ou téléphoniques, ou de tuyaux ou canalisations souples.

On connaît déjà des ensembles mécanisés permettant d'effectuer ces différentes opérations. Un tel ensemble mécanisé comprend notamment un véhicule motorisé, généralement un tracteur ou un engin de travaux publics, sur lequel sont montés par exemple à l'avant du véhicule une réserve contenant lesdits objets allongés et à l'arrière du véhicule, une roue trancheuse pour la réalisation de la tranchée. En général, un dispositif de guidage pour la pose des objets allongés dans le fond de la tranchée est liée au véhicule, et permet aux objets de prendre une courbure déterminée afin qu'ils se posent convenablement dans le fond de la tranchée.

Ainsi, lors du déplacement du véhicule motorisé, la roue trancheuse, entraînée par un moteur, creuse la tranchée en évacuant la terre de part et d'autre de celle-ci, et simultanément à sa réalisation, les objets traversent le dispositif de guidage et se déposent dans le fond de la tranchée.

Ce type d'ensemble mécanisé présente cependant des inconvénients. En effet, le fond de la tranchée ainsi réalisé est le plus souvent constitué d'un amalgame de terre et de roches plus ou moins tranchantes et coupantes. De ce fait, les objets ou analogues, risquent de se détériorer au contact des roches et des pierres. Des amorces de criques et de fissures apparaissent alors sur l'enrobage protecteur desdits objets, et peuvent provoquer par la suite la mise à nu desdits objets ou leurs ruptures. Ce risque de détérioration est d'autant plus accentué que l'amalgame de terre et de roches éjecté de part et d'autre de la tranchée lors de sa réalisation, est ramené dans celle-ci. En effet, sous l'action du propre poids de cet amalgame, les objets sont pressés contre le fond de la tranchée et donc contre les arêtes coupantes des roches. De plus, des roches tranchantes, lors du comblement de la tranchée, tombent directement sur les objets en pouvant provoquer des entailles sur ceux-ci.

D'ailleurs, un autre inconvénient fréquent des ensembles mécanisés connus actuellement réside dans le fait que l'amalgame de terre et de roches évacué hors de la tranchée est ramené dans celle-ci soit au moyen d'un autre véhicule adapté pour ce type d'opérations de comblement, soit manuellement, des ouvriers équipés de pelles se chargeant de combler les tranchées. Quelle que soit la solution employée, celle-ci entraîne un coût supplémentaire.

On remarquera que le document US-A-3 203 188 décrit un ensemble mécanisé du type ci-dessus dans lequel le câble est déposé sur une couche de matière fine provenant en partie de la matière retirée lors de la réalisation de la tranchée. Cette matière est triée par un séparateur monté sur l'appareil, de sorte que les gros morceaux la constituant (roche, pierre,...) sont évacués vers l'extérieur, tandis que la matière plus fine est amenée vers un convoyeur, puis déversée dans le fond de la tranchée, ledit câble se déposant alors sur cette couche de matière fine.

Toutefois, bien que le câble soit théoriquement protégé par la matière fine, celle-ci peut néanmoins comporter de petites roches saillantes, susceptibles de détériorer ledit câble.

Par ailleurs, dans ce brevet US-A-3 203 188, tous les moyens sont disposés sur une même ligne, ce qui entraîne, d'une part, une complexité des systèmes utilisés, notamment du séparateur et des convoyeurs, et, d'autre part, une grande longueur de l'engin affectant ainsi sa maniabilité.

On remarquera de plus que le document US-A-4 332 501 concerne un appareil destiné à déposer des câbles dans une tranchée, les câbles étant enfouis dans du sable en n' étant plus ainsi en contact avec les parois de la tranchée. Toutefois, la tranchée est préalablement réalisée par un engin approprié.

La présente invention a pour but de remédier à ces inconvénients et concerne un ensemble mécanisé pour le creusage d'une tranchée et la pose d'objets allongés dans ladite tranchée qui évite les risques de détérioration desdits objets allongés et qui puisse également combler la tranchée ainsi réalisée, une fois lesdits objets allongés déposés.

A cet effet, selon l'invention, l'ensemble mécanisé pour le creusage d'une tranchée dans le sol et la pose d'objets allongés ou analogues dans ladite tranchée du type comprenant :
- un véhicule motorisé ;
- une roue trancheuse liée audit véhicule ;
- une réserve contenant lesdits objets allongés, et liée audit véhicule ;
- un dispositif de guidage pour la pose desdits objets allongés au voisinage du fond de ladite tranchée, le dispositif de guidage étant relié audit véhicule ; et
- des moyens pour déverser une matière pulvérulente fine dans ladite tranchée,

est caractérisé en ce que :
- ledit dispositif de guidage pour la pose desdits objets allongés est constitué de deux plaques espacées l'une de l'autre, lesdits objets allongés passant dans l'espace ménagé entre lesdites plaques en étant guidés par des galets rotatifs montés sur des axes solidaires desdites plaques,

- un réceptacle relié audit véhicule motorisé, et contenant une matière pulvérulente fine est prévu en parallèle sur ledit véhicule motorisé ; et

- des moyens sont prévus pour amener ladite matière pulvérulente fine dudit réceptacle jusqu' entre lesdites plaques dudit dispositif de guidage, de façon que, lors de la réalisation de ladite tranchée par la roue trancheuse, ladite matière pulvérulente s'écoule en dessous desdits objets allongés dans le fond de la tranchée, puis recouvre ces objets allongés, ces derniers étant ainsi noyés dans ladite matière pulvérulente fine déposée dans ladite tranchée.

Ainsi, grâce à l'invention, lesdits objets allongés ne sont plus directement au contact de la terre et des roches mais sont enrobés de la matière pulvérulente fine choisie spécialement (par exemple du sable), laquelle fait ainsi office de protection, cette opération d'enrobage étant réalisée en continu au fur et à mesure du creusage de la tranchée et de la pose desdits objets allongés. De plus, ledit réceptacle étant en parallèle sur le véhicule motorisé, la longueur dudit ensemble mécanisé peut ne pas être excessivement longue.

Avantageusement, ledit réceptacle est monté sur une remorque attelée audit véhicule motorisé, ladite remorque étant sensiblement disposée en parallèle avec ladite roue trancheuse.

Dans une forme préférée de réalisation, ledit réceptacle contenant ladite matière pulvérulente fine comporte un fond mobile permettant d'entraîner et de brasser ladite matière pulvérulente pour son évacuation vers lesdits moyens d'amenée. Ledit fond mobile peut être constitué d'au moins un tapis roulant mû, par exemple, par un moteur.

Selon une autre caractéristique de l'invention, lesdits moyens d'amenée de la matière pulvérulente fine sont disposés transversalement audit réceptacle, lors du creusage de la tranchée. Ladite matière pulvérulente peut ainsi être déversée, depuis le réceptacle, dans ladite tranchée, parallèle à ladite remorque. Les moyens d'amenée sont, par exemple, constitués par une vis sans fin mue en rotation par un moteur.

Selon une autre caractéristique de l'invention, ladite réserve peut être constituée par une bobine sur laquelle sont enroulés lesdits objets allongés, ladite bobine étant montée par l'intermédiaire de son axe dans des encoches ménagées sur des bras articulés audit véhicule motorisé, et étant disposée transversalement par rapport audit véhicule. Selon un mode de réalisation avantageux, chaque bras comporte au moins deux encoches permettant de recevoir ainsi différents types de bobines. Dans une réalisation particulière, trois bras peuvent être montés en parallèle sur un support articulé audit véhicule. Ainsi, une première bobine peut être montée, par l'intermédiaire de son axe, dans des encoches respectivement du premier et du deuxième bras, et une seconde bobine peut être montée, par l'intermédiaire de son axe, dans l'autre encoche du deuxième bras et dans l'encoche correspondante du troisième bras.

Selon une autre caractéristique de l'invention, l'ensemble mécanisé comporte des moyens de signalisation, constitués par exemple par une bande susceptible d'être disposée sur ladite matière pulvérulente fine entourant lesdits objets allongés. Lesdits moyens de signalisation sont portés par exemple par le dispositif de guidage. Ladite bande ainsi déposée permet alors d'identifier le type d'objets enfouis dans la matière pulvérulente ainsi que leurs emplacements.

Selon l'invention, l'ensemble mécanisé comporte avantageusement, à l'arrière du dispositif de guidage, des moyens de comblement de ladite tranchée pour ramener la terre évacuée par ladite roue trancheuse lors de la réalisation de la tranchée, dans celle-ci.

Dans une forme préférée de réalisation, les moyens de comblement sont constitués par deux socs liés chacun à un bras fixé au dispositif de guidage, les deux socs étant orientés de façon à converger vers le plan vertical médian de la tranchée, le point de convergence s' éloignant dudit dispositif de guidage lié à ladite roue trancheuse.

Les figures du dessin annexé feront bien comprendre comment l'invention peut être réalisée. Des références identiques désignent des éléments semblables.

La figure 1 représente, en élévation, l'ensemble mécanisé selon l'invention en cours de fonctionnement.

La figure 2 représente, en vue de dessus, l'ensemble mécanisé selon la figure 1.

La figure 3 représente une vue acrandie montrant la pose desdits objets allongés dans ladite tranchée.

L'ensemble mécanisé selon l'invention est destiné au creusage de tranchées dans le sol et à la pose d'objets allongés ou analogues dans les tranchées.

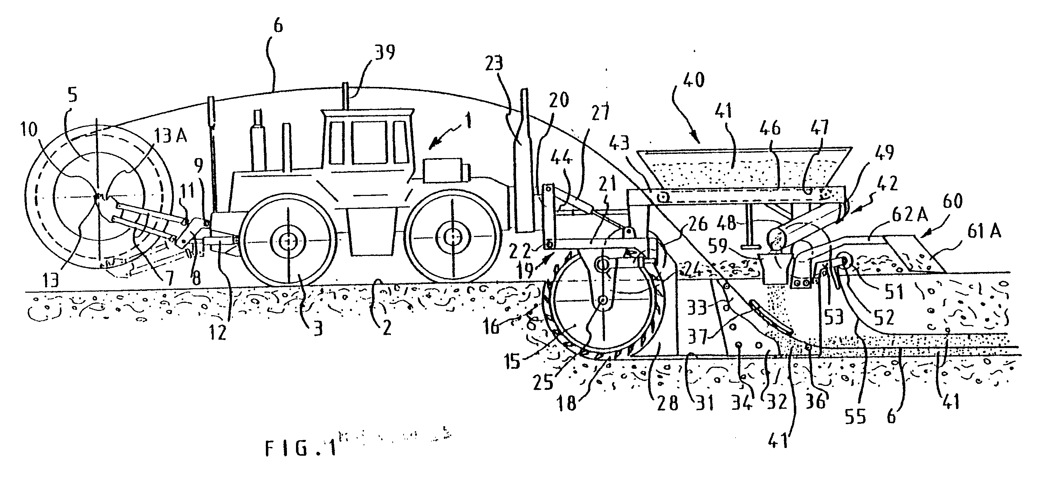

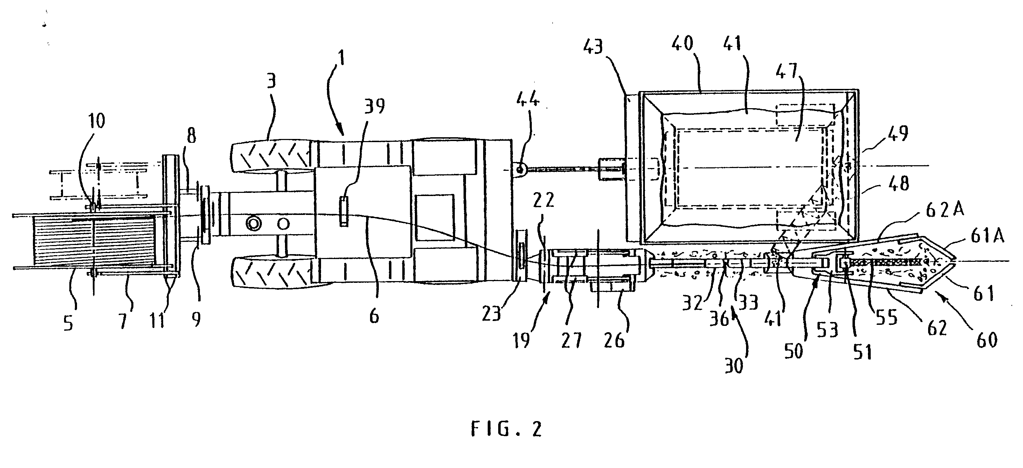

L'ensemble mécanisé, montré par les figures 1 et 2, comprend un véhicule motcrisé 1 du type engin de travaux publics reposant sur le sol 2 par l'intermédiaire de roues 3, voire de chenilles.

Une réserve contenant lesdits objets allongés, par exemple une bobine 5 sur laquelle sont enroulés des câbles 6, est montée à l'avant du véhicule au moyen de bras rigides 7 liés à un support 8 articulé, autour d'un axe 9, à l'avant du véhicule. Plus précisément, deux bras 7 disposés de part et d'autre de la bobine portent' l'axe 10 de celle-ci, et sont montés dans des rainures 11 ménagées sur le support 8. Ainsi, l'écartement des deux bras peut être réglé en fonction de la largeur de la bobine utilisée. De plus, deux vérins 12, articulés d'une part, à l'avant du véhicule motorisé 1 et d'autre part, au support 8, permettent d'assurer le levage et la dépose de la bobine sur le sol par l'intermédiaire des bras 7 liés audit support, ce dernier pivotant autour de l'axe 9.

Dans une autre variante de réalisation, illustrée en traits mixtes sur la figure 2, un troisième bras identique aux précédents peut être monté dans les rainures 11 du support 8. Cet agencement particulier permet ainsi de monter une première bobine entre le premier et le deuxième bras, et une seconde bobine entre le deuxième et le troisième bras. Les bobines peuvent être de dimensions identiques ou différentes. Pour pouvoir porter lesdites bobines, lesdits bras 7 sont pourvus d'encoches 13 à leur extrémité dans lesquelles sont déposés les axes des bobines. Avantageusement, chaque bras comporte alors au moins deux encoches 13 et 13A de largeur différente permettant de recevoir par exemple une bobine d'un diamètre donné entre les premier et deuxième bras et une bobine d'un diamètre différent entre les deuxième et troisième bras.

L'ensemble mécanisé comprend également une roue trancheuse 15 liée à l'arrière du véhicule motorisé 1. La roue trancheuse 15 est pourvue à sa périphérie d'une pluralité d'outils tranchants 16 régulièrement répartis, permettant le creusage et la réalisation d'une tranchée 18. La roue trancheuse 15 est portée par un châssis 19 constitué de deux parties 20 et 21 articulées entre elles autour d'un axe 22. La première partie 20 est montée sur une potence 23 solidaire de l'arrière du véhicule motorisé 1. La seconde partie 21 du châssis 19 comporte notamment deux flancs 24 parallèles espacés portant la roue 15 au moyen d'un axe 25, la roue 15 étant disposée entre les deux flancs 24. L'entraînement en rotation de la roue trancheuse 15 autour de l'axe 25 est obtenu par un moteur 26 fixé à la partie 21 du châssis 19. Cet entraînement bien connu en soi, est réalisé par une roue dentée portée par l'arbre du moteur coopérant avec un profil denté intérieur ménagé sur la roue 15. De plus, un vérin 27 articulé à la partie 20 et à la partie 21 du chassis 19 permet le relevage ou l'abaissement de la roue trancheuse 15 autour de l'axe d'articulation 22. Un talon de protection 28 est associé à la partie 21 du châssis, en recouvrant l'arrière de la roue 15.

L'ensemble mécanisé comprend aussi un dispositif de guidage 30 pour la pose par exemple des câbles 6 au voisinage du fond 31 de la tranchée 18 réalisée par la roue tranchante 15. Le dispositif 30 est fixé à l'arrière du talon 28 par des moyens de fixation appropriés et est ainsi solidaire de la partie 21 du châssis 19. Ce dispositif 30 est constitué de deux plaques 32 et 33 espacées l'une de l'autre et reliées entre elles par des entretoises 34. Les câbles 6 passent ainsi dans l'espace ménagé entre les plaques 32 et 33 en étant guidés par des galets 36 montés sur des axes 35 solidaires des plaques, ainsi que par un système 37 tendeur de câbles constitué de plusieurs galets 38.

L'ensemble de ces galets 36 et 38 permet ainsi aux câbles 6 passant entre lesdits plaques 32 et 33, d'être guidés et de prendre une courbure déterminée pour sortir du dispositif 30 sensiblement tangentiellement au fond 31 de la tranchée 18. Il est également prévu, pour le guidage des câbles issus de la bobine vers le dispositif 30, des guides 39 montés sur le véhicule motorisé 1, lesdits câbles passant alors au-dessus du véhicule.

Selon l'invention, l'ensemble mécanisé comporte de plus un réceptacle 40, relié au véhicule 1 et contenant une matière pulvérulente fine 41, et des moyens d'amenée 42 de la matière pulvérulente du réceptacle 40 au dispositif de guidage 30.

Comme il le sera davantage explicité dans le fonctionnement de l'ensemble mécanisé, la matière pulvérulente fine 41 s'écoule dans le fond 31 de la tranchée 18 de façon que les câbles 6 se déposent sur celle-ci puis soient noyés dans celle-ci ; lesdits cables 6 sont alors protégés par l'enrobage constitué par ladite matière pulvérulente.

Le réceptacle 40, en forme de pyramide tronquée renversée, est avantageusement monté sur une remorque 43 attelée en 44, â l'arrière du véhicule motorisé 1. La remorque 43 (figure 2) est disposée en parallèle avec la roue trancheuse 15. L'ensemble mécanisé est alors constitué d'une première ligne définie par la roue trancheuse 15 et le dispositif de guidage 30, et d'une seconde ligne, parallèle à la première, définie par la remorque 43.

Le réceptacle 40 comporte un fond mobile 46 constitué d'un tapis roulant 47, éventuellement deux, mû en rotation par un moteur non représenté sur les figures. Les moyens d'amenée 42 sont disposés sous le réceptacle 40 au voisinage d'une extrémié du tapis roulant 47. Ainsi, la matière pulvérulente 42 entraînée et brassée par le mouvement du tapis se déverse dans lesdits moyens d'amenée 42. Ces derniers sont constitués par exemple par une vis sans fin 48, connue en soi, et mû en rotation par un moteur non représenté sur les figures. La vis sans fin est susceptible de pivoter autour d'une articulation 49 liée à la remorque 43 de façon à être disposée transversalement au réceptacle 40, lors du fonctionnement de l'ensemble mécanisé.

Selon une autre caractéristique de l'invention, il est prévu des moyens de signalisation ,50 constitués par exemple, par une bandê, et permettant notamment l'identification du type de câbles débosés dans la tranchée. Ces moyens 50 sont aptes à être disposés sur la matière pulvérulente 41 enveloppant les câbles, et sont agencés sur un tambour 51 monté en rotation autour d'un axe 52 porté par un étrier 53 solidaire des plaques 32 et 33 du dispositif de guidage 30. La bande souple 55 est enroulée autour du tambour rotatif 51, et suivant sa couleur, on détermine le type de câbles enfouis dans la matière pulvérulente 41 ainsi que l'emplacement exact de ces câbles dans le sol.

Selon l'invention, des moyens de comblement 60 de la tranchée permettant de ramener l'amalaame de terre et de roches évacué par la roue trancheuse 15 de part et d'autre de la tranchée, dans celle-ci. Les moyens de comblement 60 sont constitués par exemple par deux socs 61 et 61A liés chacun à un bras 62 et 62A fixé au dispositif de guidage 30. plus précisément, le bras 62 portant le soc 61 est fixé à la plaque 32, et l'autre bras 62A portant le soc 61A est fixé à la plaque 33. Les deux socs 61 et 61A sont orientés de façon à couverger vers le plan vertical médian de la tranchée, le point de convergence s'éloignant du dispositif de guidage 30 lié à ladite roue trancheuse. Ainsi, la première ligne définie par la roue trancheuse 15 comporte également, associés à l'arrière de la roue, le dispositif de guidage 30, les moyens de signalisation 50 et les moyens de comblement 60.

Le fonctionnement de l'ensemble mécanisé de l'invention est le suivant : dans la cabine du véhicule motorisé 1 sont situées les commandes des divers moteurs et vérins agissant sur les éléments décrits ci-dessus constituant ledit ensemble.

Comme on peut le voir sur les figures 1 et 2, la bobine 5 est portée par les bras 7 du support 8, lequel se trouve en position haute grâce aux vérins 12 (la position basse est illustrée en pointillés). La roue trancheuse 15 entraînée en rotation par le moteur 26 puis mise en position de travail grâce aux vérins 27, creuse alors la tranchée 18 dans le sol 2 au moyen des outils 16, à une profondeur déterminée. La terre et les roches sont évacuées de part et d'autre de la tranchée 18.

La matière pulvérulente fine 41, telle que du sable fin, contenue dans le réceptacle 40 est brassée puis entraînée vers la vis sans fin 48, laquelle est alors disposée transversalement par rapport aux deux lignes précitées ; les moteurs agissant sur ces différents éléments ayant été mis en marche.

la vis sans fin 48 envoie le sable fin 41 à travers un entonnoir 50 facilitant 1'introduction du sable entre les deux plaques 32 et 33 du dispositif de guidage 30. Celui-ci, lié à la partie 21 du châssis 19 par le talon 28 se trouve, en conséquence, dans la tranchée 18. Ainsi, le sable fin 41 se dépose dans le fond 31 de la tranchée 18. Les câbles 6, passant dans les guides 39, défilent sur les galets 36 et 38 pour sortir avec une courbure sensiblement tangente au fond de la tranchée puis se déposer sur la couche de sable fin 41. Durant la dépose des câbles 6, le sable fin 41 continue de s'écouler jusqu'à recouvrir ceux-ci d'un lit de sable de plusieurs centimètres d'épaisseur.

Bien entendu, le débit de sable, la vitesse de défilement des câbles, la vitesse de déplacement du véhicule motorisé et la vitesse de rotation de la roue trancheuse sont déterminés préalablement.

Les câbles 6 sont en conséquence noyés au voisinage du fond 31 de la tranchée 18 dans le sable fin 41, lequel procure une protection efficace des câbles à l'encontre des roches ou autres objets tranchants pouvant se trouver dans le sol.

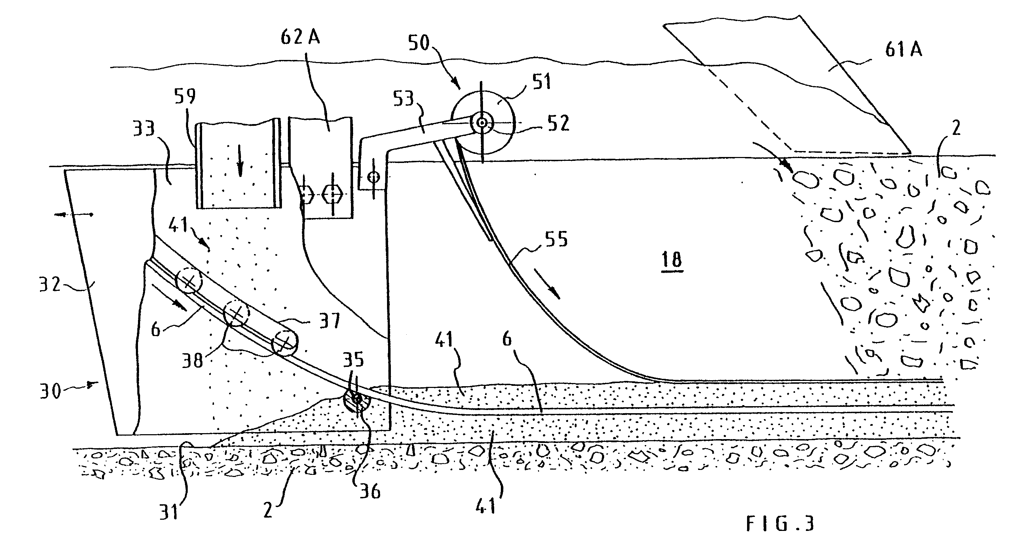

L'illustration de ces diverses opérations simultanées est davantage représentée en regard de la figure 3.

Pendant la progression de l'ensemble mécanisé, notamment l'enfouissage des câbles 6 par le sable 41, la bande souple 55 se déroule autour du tambour 51 pour venir se déposer sur le sable fin 41. Ainsi, dans le cas où un remplacement des câbles 6 serait à effectuer ultérieurement, le type de ceux-ci serait identifié par la couleur de la bande souple, ainsi que leurs emplacements dans le sol.

Une fois la dépose de la bande souple 55 réalisée, le comblement de la tranchée est exécuté grâce aux deux socs 61 et 61A liés au dispositif de guidage. Les socs ramènent alors, dans la tranchée, l'amalgame de terre et de roches évacués préalablement, lequel rebouche la totalité de la tranchée.

Un tel ensemble mécanisé selon l'invention procure des avantages déterminants par rapport aux ensembles mécanisés de l'art antérieur notamment celui de noyer les câbles déposés dans le fond de la tranchée par une matière pulvérulente fine faisant office de protection, l'opération d'enrobage des câbles étant réalisée en continu au fur et à mesure du creusage de la tranchée et de la pose desdits câbles.

**Revendications**

1. Ensemble mécanisé pour le creusage d'une tranchée (18) dans le sol (2) et la pose d'objets allongés (6) ou analogues dans ladite tranchée du type comprenant:
   - un véhicule motorisé (1) ;
   - une roue trancheuse (15) liée audit véhicule ;
   - une réserve (5) contenant lesdits objets allongés, et liée audit véhicule ;

- un dispositif de guidage (30) pour la pose desdits objets allongés au voisinage du fond (31) de ladite tranchée (18), le dispositif de guidage étant relié audit véhicule et
- des moyens d'amenée pour deverser une matière pulvérulente fine(41) dans ladite tranchée, caractérisé en ce que :
  - ledit dispositif de guidage (30) pour la pose desdits objets allonges (6)est constitué de deux plaques (32 et 33) espacées l'une de l'autre, lesdits objets allongés (6) passant dans l'espace ménagé entre lesdites plaques (32 et 33) en étant guidés par des galets rotatifs (36 et 38) montés sur des axes (35) solidaires desdites plaques,
  - un réceptacle (40) relié audit véhicule motorisé (1), et contenant une matière pulvérulente fine (41) est prévu en paralléle sur ledit véhicule motorisé (1) ; et
  - des moyens d'amenée(42,59) sont prévus pour amener ladite matière pulvérulente fine (41) dudit réceptacle (40) jusqu' entre lesdites plaques dudit dispositif de guidage (30), de façon que, lors de la réalisation de ladite tranchée (18) par la roue trancheus(15), ladite matière Pulvérulente fine(41) s'écoule en dessous desdits objets allongés (6) dans le fond (31) de la tranchée, puis recouvre ces objets allongés (6), ces derniers étant ainsi noyés dans ladite matière pulvérulente fine (41) déposée dans ladite tranchée.

2. Ensemble mécanisé selon la revendication 1, caractérisé en ce que ledit réceptacle (40) est monté sur une remorque (43) attelée audit véhicule motorisé (1), en parallèle avec ladite roue trancheuse (15).

3. Ensemble mécanisé selon l'une des revendications 1 ou 2, caractérisé en ce que ledit réceptacle (40) contenant ladite matière pulvérulente fine (41) comporte un fond mobile (46) permettant d'entraîner et de brasser ladite matière pulvérulente pour son évacuation vers lesdits moyens d'amenée (42).

4. Ensemble mécanisé selon la revendication 3, caractérisé en ce que ledit fond mobile (46) du réceptacle est constitué d'au moins un tapis roulant (47) mû par un moteur.

5. Ensemble mécanisé selon l'une des revendications précédentes,

caractérisé en ce que lesdits moyens d'amenée (42) de la matière pulvérulente fine sont disposés transversalement audit réceptacle (40), lors du creusage de la tranchée (18).

6. Ensemble mécanisé selon la revendication 5, caractérisé en ce que lesdits moyens d'amenée (42) sont constitués par une vis sans fin (48) mue en rotation par un moteur.

7. Ensemble mécanisé selon l'une des revendications précédentes, caractérisé en ce que ladite réserve est constituée d'une bobine (5) sur laquelle sont enroulés lesdits objets allongés (6), ladite bobine étant montée par l'intermédiaire de son axe (10) dans des encoches (13) ménagées sur des bras (7) articulés audit véhicule motorisé (1), et étant disposée transversalement par rapport audit véhicule (1).

8. Ensemble mécanisé selon la revendication 7, caractérisé en ce que chaque bras (7) comporte au moins deux encoches (13 et 13A) permettant de recevoir différents types de bobines.

9. Ensemble mécanisé selon la revendication 8, caractérisé en ce qu'au moins trois bras (7) sont montés en parallèle sur un support (8) articulé audit véhicule motorisé (1).

10. Ensemble mécanisé selon l'une des revendications précédentes, caractérisé en ce qu'il comporte, en outre, des moyens de signalisation (50), constitués par une bande (55) susceptible d'être disposée sur ladite matière pulvérulente fine (41) entourant lesdits objets allongés (6).

11. Ensemble mécanisé selon l'une des revendications précédentes, caractérisé en ce qu'il comporte des moyens de comblement (60) de ladite tranchée situés à l'arriere dudit dispositif de guidage (30) pour ramener la terre évacuée par ladite roue trancheuse (15) lors de la réalisation de la tranchée (18), dans celle-ci.

12. Ensemble mécansé selon la revendication 11, caractérisé en ce que lesdits moyens de comblement (60) sont constitués par deux socs (61 et 61A) liés chacun à un bras (62 et 62A) fixé au dispositif de guidage (30), les deux socs étant orientés de façon à converger vers le plan vertical médian de la tranchée, le point de convergence s'éloignant dudit dispositif de guidage lié à ladite roue trancheuse.

**13.** Ensemble mécanisé selon l'une des revendications 1 à 12,
caractérisé en ce que ladite matière pulvérulente fine (41) est un sable.

## Claims

**1.** Mechanized assembly for digging a trench (18) in the ground (2) and laying elongate objects (6) or the like into said trench, of the type comprising :
- a motorized vehicle (1) ;
- a digging wheel (15) connected to said vehicle ;
- a reserve (5) containing said elongate objects, and connected to said vehicle ;
- a guiding device (30) for laying said elongate objects in the vicinity of the bottom (31) of said trench (18), the guiding device being connected to said vehicle ; and
- feeding means (42,59) for discharging a fine powdery material (41) into said trench, characterized in that :
- said guiding device (30) for laying said elongate objects (6) consists of two plates (32 and 33) spaced one from the other, said elongate objects (6) passing through the space provided between said plates (32 and 33) being guided by rotary rollers (36 and 38) mounted on axles (35) solid with said plates,
- a receptacle (40) connected to said motorized vehicle (1), and containing a fine powdery material (41) is provided in parallel on said motorized vehicle (1) ; and
- feeding means (42,59) are provided for feeding said fine powdery material (41) from said receptacle (40) to between said plates of said guiding device (30), so that, upon digging of the trench (18) by the digging wheel (15), said fine powdery material (41) flows beneath said elongate objects (6) into the bottom (31) of the trench, and then covers the elongate objects (6), the latter being thus embedded in said fine powdery material (41) poured into said trench.

**2.** Mechanized assembly according to claim 1, characterized in that said receptacle (40) is mounted on a trailer (43) connected to said motorized vehicle (1), in parallel with said digging wheel (15).

**3.** Mechanized assembly according to one of claims 1 or 2,
characterized in that said receptacle (40) containing said fine powdery material (41) comprises a movable bottom (46) for driving and mixing said powdery material for discharging it towards said feeding means (42).

**4.** Mechanized assembly according to claim 3, characterized in that said movable bottom (46) of the receptacle consists of at least one endless belt (47) actuated by a motor.

**5.** Mechanized assembly according to one of the preceding claims,
characterized in that said means (42) for feeding the fine powdery material are disposed transversely to said receptacle (40), upon digging of the trench (18).

**6.** Mechanized assembly according to claim 5, characterized in that said feeding means (42) consist of an endless screw (48) actuated in rotation by a motor.

**7.** Mechanized assembly according to one of the preceding claims,
characterized in that said reserve consists of a drum (5) on which said elongate objects (6) are wound, said drum being mounted by means of its axle (10) in notches (13) provided in arms (7) articulated to said motorized vehicle (1), and being disposed transversely with respect to said vehicle (1).

**8.** Mechanized assembly according to claim 7, characterized in that each arm (7) comprises at least two notches (13 and 13A) for receiving different types of drums.

**9.** Mechanized assembly according to claim 8, characterized in that at least three arms (7) are mounted in parallel on a support (8) articulated to said motorized vehicle (1).

**10.** Mechanized assembly according to one of the preceding claims,
characterized in that it further comprises signalling means (50), consisting of a strip (55) capable of being disposed onto said fine powdery material (41) embedding said elongate objects (6).

**11.** Mechanized assembly according to one of the preceding claims,
characterized in that it comprises means (60) for filling in said trench located at the rear of said guiding device (30) for bringing back earth discharged by said digging wheel (15) upon digging of the trench (18), thereinto.

**12.** Mechanized assembly according to claim 11, characterized in that said filling means (60) consist of two ploughshares (61 and 61A) each connected to an arm (62 and 62A) attached to the guiding device (30), the two ploughshares being oriented so as to converge towards the median vertical plane of the trench, the convergence point being away from the guiding device connected to said digging wheel.

13. Mechanized assembly according to one of claims 1 to 12,
characterized in that said fine powdery material (41) is sand.

## Ansprüche

1. Mechanisierte Anordnung zum Ausheben eines Grabens (18) im Erdboden (2) und zum Verlegen von langgestreckten Gegenständen (6) oder dergleichen in diesen Graben mit:
   - einem motorisierten Fahrzeug (1);
   - einem an das Fahrzeug gebundenen Schürfrad (15);
   - einem an das Fahrzeug gebundenen Vorrat (5) der langgestreckten Gegenstände;
   - einer Führungsvorrichtung (30) zum Verlegen der langgestreckten Gegenstände in die Nähe des Bodens (31) des Grabens (18), wobei die Führungsvorrichtung mit dem Fahrzeug verbunden ist; und
   - Zuführmitteln (42, 59), um einen feinkörnigen Stoff (41) in den Graben einzubringen, dadurch gekennzeichnet, daß:
   - die Führungsvorrichtung (30) zum Verlegen der langgestreckten Gegenstände (6) aus zwei Platten (32 und 33) besteht, die einen Abstand voneinander haben, wobei die langgestreckten Gegenstände (6) in den freigesparten Raum zwischen den Platten (32 und 33) hineinlaufen und dabei durch drehbare Rollen (36 und 38) geführt werden, die auf an den Platten befestigten Achsen (35) gelagert sind,
   - ein mit dem motorisierten Fahrzeug (1) verbundener Behälter (40), der einen feinkörnigen Stoff (41) enthält, parallel zu dem motorisierten Fahrzeug angeordnet ist; und
   - Zuführmittel (42, 59) vorgesehen sind, um den feinkörnigen Stoff (41) von dem Behälter (40) bis zwischen die Platten der Führungsvorrichtung (30) zu leiten, derart, daß während der Herstellung des Grabens (18) durch das Schürfrad (15) der feinkörnige Stoff (41) unter die langgestreckten Gegenstände (6) in den unteren Teil (31) des Grabens fließt und dann diese langgestreckten Gegenstände (6) bedeckt, so daß diese letzteren in dem in den Graben eingebrachten feinkörnigen Stoff (41) eingebettet sind.

2. Mechanisierte Anordnung nach Anspruch 1, dadurch gekennzeichnet, daß der Behälter (40) auf einem Anhänger (43) montiert ist, der parallel zu dem Schürfrad (15) an das motorisierte Fahrzeug (1) angehängt ist.

3. Mechanisierte Anordnung nach einem der Ansprüche 1 oder 2,
dadurch gekennzeichnet, daß der den feinkörnigen Stoff (41) enthaltende Behälter (40) einen beweglichen Boden (46) aufweist, der es erlaubt, den feinkörnigen Stoff mitzuführen und aufzulockern, um ihn zu den Zuführmitteln hin (42) zu entleeren.

4. Mechanisierte Anordnung nach Anspruch 3, dadurch gekennzeichnet, daß der bewegliche Boden (46) des Behälters aus mindestens einem Rollteppich (47) besteht, der von einem Motor angetrieben wird.

5. Mechanisierte Anordnung nach einem der vorhergehenden Ansprüche,
dadurch gekennzeichnet, daß die Zuführmittel (42) für den feinkörnigen Stoff während des Aushebens des Grabens (18) quer zu dem Behälter (40) angeordnet sind.

6. Mechanisierte Anordnung nach Anspruch 5, dadurch gekennzeichnet, daß die Zuführmittel (42) aus einer Förderschnecke (48) bestehen, die von einem Motor rotierend angetrieben wird.

7. Mechanisierte Anordnung nach einem der vorhergehenden Ansprüche,
dadurch gekennzeichnet, daß der Vorrat aus einer Spule (5) besteht, auf welcher die langgestreckten Gegenstände (6) aufgerollt sind, wobei die Spule bezüglich des Fahrzeugs (1) quer versetzt ist und mittels ihrer Achse (10) in Aufnahmeschlitze (13) eingesetzt ist, die aus an dem motorisierten Fahrzeug (1) angelenkten Armen ausgespart sind.

8. Mechanisierte Anordnung nach Anspruch 7, dadurch gekennzeichnet, daß jeder Arm (7) mindestens zwei Aufnahmeschlitze (13 und 13A) aufweist, die verschiedene Spulentypen aufnehmen können.

9. Mechanisierte Anordnung nach Anspruch 8, dadurch gekennzeichnet, daß mindestens drei Arme (7) parallel zueinander auf einem Support (8) angeordnet sind, der an dem motorisierten Fahrzeug (1) angelenkt ist.

10. Mechanisierte Anordnung nach einem der vorhergehenden Ansprüche,
dadurch gekennzeichnet, daß sie außerdem Anzeigemittel (50) aufweist, die aus einem Band (55) bestehen, das auf den die langgestreckten Gegenstände (6) einschließenden feinkörnigen Stoff (41) aufgelegt werden kann.

11. Mechanisierte Anordnung nach einem der vorhergehenden Ansprüche,
dadurch gekennzeichnet, daß sie Zuschüttmittel (60) für den Graben aufweist, die hinter der Führungsvorrichtung (30) angeordnet sind, um das während der Herstellung des Grabens (18) durch das Schürfrad (15) herausgeförderte Erdmaterial wieder in diesen einzubringen.

12. Mechanisierte Anordnung nacn Anspruch 11,
dadurch gekennzeichnet, daß die Zuschüttmittel (60) aus zwei an je einem Arm (62 und 62A) angebrachten Streichschilden (61 und 61A) bestehen, welche Arme an der Führungsvorrichtung (30) befestigt sind, wobei die beiden Streichschilde derart orientiert sind, daß sie zur vertikalen Mittelebene des Grabens hin konvergieren, wobei der Konvergenzpunkt sich von der mit dem Schürfrad verbundenen Führungsvorrichtung entfernt.

13. Mechanisierte Anordnung nach einem der Ansprüche 1 bis 12,
dadurch gekennzeichnet, daß der feinkörnige Stoff (41) ein Sand ist.

FIG.1

FIG. 2

FIG.3